# EUROPEAN PATENT APPLICATION

(11) **EP 3 059 703 A1**
(43) Date of publication of application: **24.08.2016**
(21) Application number: 15305264.2
(22) Date of filing: 20.02.2015
(51) Int. Cl.: G06Q 20/42, G06Q 20/40, G06Q 20/32, G06Q 20/38

(54) **Method for retrieving by a payment server a funding permanent account number from a token payment account number**

(71) Applicant: GEMALTO SA, 92190 Meudon (FR)
(72) Inventor: Martin, Alain, 92190 Meudon (FR)
(74) Representative: Delaval, Guillaume Laurent

(57) **Abstract**

The invention concerns a method for retrieving by a payment server adapted to communicate with a payment network a funding primary account number (F-PAN) from a non-sensitive equivalent called token primary account number (T-PAN) used for a transaction to be carried out via the payment network, the method comprising the steps of: providing (200) for each transaction a first type of data unit comprising a token payment account number (T-PAN), a cryptogram authenticating the transaction and a transaction identifier identifying a transaction , said cryptogram and T-PAN being transmitted to the payment server through a telecommunications network distinct from the payment network; memorizing (201) the data units of the first type; receiving (202) from the payment network a request for retrieving a funding primary account number (F-PAN); verifying (203) that there is at least one data unit of the first type memorized in the payment server for which the token primary account number (T-PAN) and the transaction identifier match with a the data unit of the second type transmitted with the request; verifying (204) that the transaction is correctly authenticated by the cryptogram; providing (205) the funding primary account number (F-PAN) corresponding to the token primary account number (T-PAN).

## Description

### TECHNICAL FIELD

The present invention relates to a method for retrieving by a payment server a funding primary account number from a token primary account number. In particular but not exclusively, the invention is applicable to on-line payment transactions and tokenisation.

### BACKGROUND OF THE INVENTION

Card-Not-Present on-line transaction, whether on computers or mobile devices, is open to fraud. Stolen card details can be used by a fraudster because no user authentication is required.

For example, wallets and other methods integrated at the payment gateway of a merchant currently do not prevent fraud because the fraudster will not use the wallet but continue to enter stolen card details in the available fields of the payment form.

Influent financial services corporations have, in 2014, released specifications or actual offers such as ApplePay (trademark) that make use of tokens to enable payment with a mobile device. These tokens are used instead of the primary account number (PAN) of the plastic card and are loaded onto the mobile device, within a Secure Element or not. They can be used for proximity contactless transactions at the Point of Sale but also for on-line transactions on a merchant website or within the app of the merchant.

However none of these solutions protect the user from plastic card data theft. For example, an unethical employee within a store may copy all the plastic card details of a customer, including the Card Verification Value (CVV), and fraudulently use this data by paying for goods on-line. Of course, the thief will not click on the service that protects the user, and therefore will not use Apple Pay (trademark) or MasterPass (trademark). Instead, he will enter the stolen data in the usual fields provided in the merchant's payment form.

Besides, the payment services proposed by Visa, MasterCard or Apple require integration of their solutions within the merchant's web site. This means that availability of these services is dependent on deployment which takes time and entails costs.

Therefore, there is a need of an intermediate solution for on-line payment using tokens requiring minimal changes to the existing infrastructures.

### SUMMARY OF THE INVENTION

Consequently, an object of the invention is to propose a method for retrieving by a payment server adapted to communicate with a payment network a funding primary account number from a non-sensitive equivalent called token primary account number (T-PAN) used for a transaction to be carried out via the payment network.

The method comprises the steps of:
- providing for each transaction a first type of data unit comprising a token payment account number T-PAN, a cryptogram authenticating the transaction and a transaction identifier identifying a transaction, said cryptogram and transaction identifier being generated upon approval by a user of the usage of the T-PAN, said cryptogram and T-PAN being transmitted to the payment server through a telecommunications network distinct from the payment network;
- memorizing the data units of the first type;
- receiving from the payment network a request for retrieving a funding primary account number F-PAN, said request being provided with a data unit of a second type comprising a token payment account number T-PAN and a transaction identifier identifying said given transaction;
- verifying that there is at least one data unit of the first type memorized in the payment server for which the token primary account number T-PAN and the transaction identifier match with those of the data unit of the second type transmitted with the request;
- if a data unit of the first type is found after the verification step, verifying that the transaction is correctly authenticated by the cryptogram of the first type data unit identified at the previous step;
- if said transaction is correctly authenticated, providing the funding primary account number F-PAN corresponding to the token primary account number T-PAN.

In one embodiment, the transaction identifier is generated on a user device and sent to the payment server, through a telecommunications network distinct from the payment network, to be included in the data unit of a first type.

In one embodiment, the transaction identifier is generated on the payment server and sent to a user device, through a telecommunications network distinct from the payment network, and is included in the data unit of a first type.

In one embodiment, the transaction identifier has the format of a Card Verification Value (CVV).

In one embodiment, the transaction identifier has the format of an expiry date.

In one embodiment, the transaction identifier corresponds to a combination of a Card Verification Value (CVV) and an expiry date.

In one embodiment, the transaction identifier is the price of the transaction.

In one embodiment, a data unit of the first type is memorized for a predefined period of time after which it is deleted or invalidated.

In one embodiment, a data unit of the first type associated to a given transaction is deleted or invalidated once said transaction is processed, that is to say authorised or denied, by the issuing bank' authorisation server.

In one embodiment, said cryptogram and transaction identifier are generated upon identification of the user and his approval of the usage of the T-PAN.

An object of the invention is also to propose a user device comprising an application configured to allow a user to approve the use of a token primary account number T-PAN, to generate a cryptogram upon said approval and to display the token primary account number T-PAN and a transaction identifier to be used by the user on a payment form of an e-merchant proposing a transaction supported by a payment network and to transmit said T-PAN and cryptogram to a payment server via a telecommunication network distinct from the payment network.

In one embodiment, the user device is configured to generate the transaction identifier to be displayed, upon approval of the use of a token primary account number (T-PAN).

In one embodiment, the user device is configured to receive the transaction identifier to be displayed from the payment server upon approval of the use of a token primary account number (T-PAN).

In one embodiment, the cryptogram and transaction identifier are generated upon identification of the user and approval of the usage of the T-PAN.

An object of the invention is also to propose a payment server adapted to communicate with a payment network and implementing the method described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- figure 1 is an example of an on-line payment system supporting tokenization, in which the token based system is connected with the merchant's Payment Service Provider;
- figure 2 provides a simplified representation of a method for retrieving by a payment server a funding primary account number from a token primary account number used for a transaction via a payment network;
- figure 3 is an exemplary embodiment of an improved tokenisation system according to the invention for securing online transactions;
- figure 4 is an example of a mobile device 403 with an application displaying payment credentials following the user authentication;
- figure 5 is another exemplary embodiment of an improved tokenisation system according to the invention wherein a payment network's switch is used to switch authorisation messages to the payment server.

### DETAILED DESCRIPTION

In the following description, numerous specific details are set forth. However, it is understood that embodiments may be practiced without these specific details. In other instances, well known circuits, structures and techniques have not been shown in detail in order not to obscure the understanding of the description.

The method according to the invention allows a user authentication and user approval of a token-based on-line transaction. One of the advantages of the invention is that a token primary account number (T-PAN) may be securely used on all merchant sites instead of the funding PAN of the plastic card and that the latter can be disabled for on-line payment, thus protecting the genuine user from stolen payment card credentials. In this description, the expression "on-line transaction" refers to any kind of payment transaction operated on line and for which the payment card is not present.

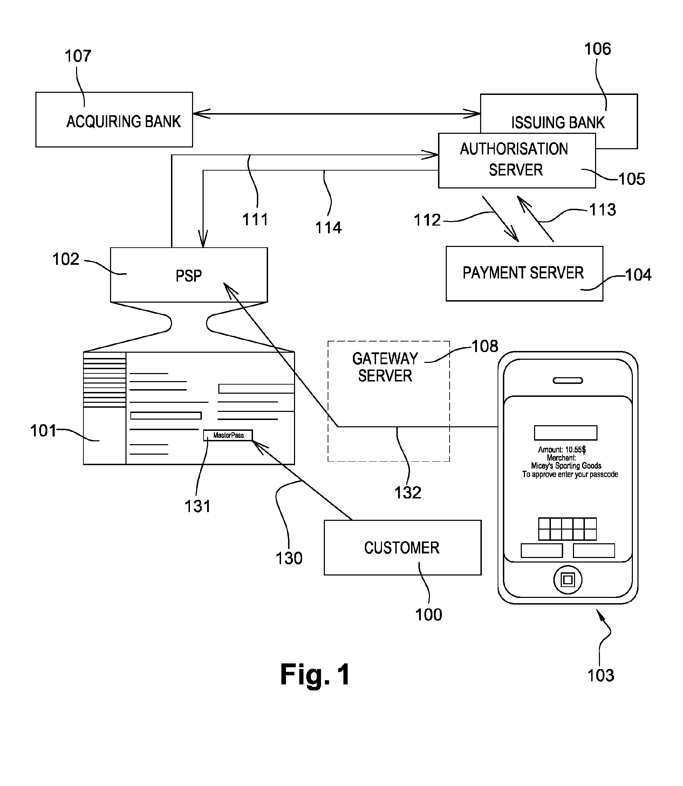

**Figure 1** is an example of an on-line payment system, supporting tokenization, in which the token based system is connected with the merchant's Payment Service Provider.

In this description, a user designates the client of a bank. This bank is called issuing bank, for example a bank which has provided the user with a payment card and with a payment token such as a token primary account number (T-PAN). The issuing bank's payment system, typically but not necessarily an authorisation server, will consult a payment server upon receipt of a transaction authorisation request originating from the merchant.

More precisely, a user 100 wants to buy a product proposed by the web site of an internet merchant. At the time of completing the transaction, a payment form 101 invites the user 100 to enter its payment credentials, or to activate a token based payment service such as MasterPass (trademark).

In this example, the user 100 chooses 130 to activate the token based payment service 131. Thanks to an application executed on its mobile device 103 called client application and connecting with the merchant's payment acceptance system, the user is able to check data associated to the transaction, for example the name of the e-merchant and the price of the transaction. To approve the transaction, the customer needs to be identified, for example by entering a PIN code via its mobile device.

A successful user identification triggers the generation of a cryptogram which is automatically sent 132 with the token primary account number (T-PAN) via the payment network to the issuer for verification. More precisely, the T-PAN and the cryptogram are sent to an authorisation server 105 through one or several gateway servers 108 and a server 102 of the payment service provider (PSP). The PSP server 102 then sends an authorisation request 111 to the authorisation server 105. Then, the authorisation server 105 sends a de-tokenisation request 112 to a payment server 104 which will carry out the de-tokenisation process. In this description, the de-tokenisation refers to the process of retrieving a funding primary account number (F-PAN) associated to a token primary account number (T-PAN) transmitted in a de-tokenisation request.

The cryptogram received in the de-tokenisation request is then verified by the payment server 104. The payment server is configured to store the F-PANs and T-PANs attributed by the issuing bank to its clients. Further, the payment server is able to find an F-PAN knowing its associated T-PAN and vice-versa.

If the verification of the received cryptogram is positive, the payment server 104 sends an authorisation request 113 to the authentication server 105 based on the F-PAN.

The authorization request is then processed by the authorization server 105 and the response message (approve or deny) sent (after retokenisation) 114 by the authorization server 105 to the payment service provider 102.

One drawback of this solution is that its implementation requires integration with the merchant PSP (Payment Service Provider) as well as with the issuing bank. It is therefore a long and costly process to deploy this kind of payment service.

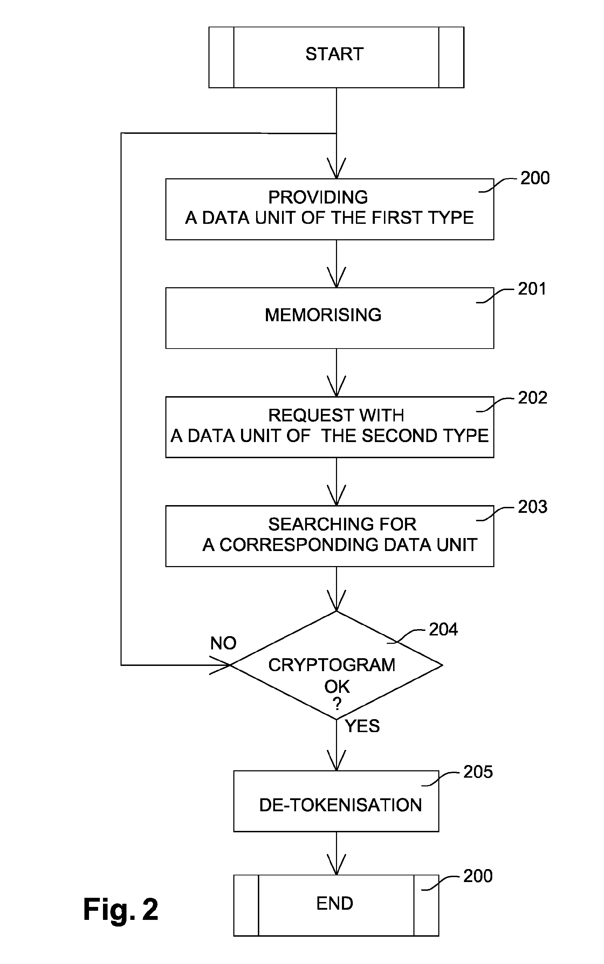

**Figure 2** provides a simplified representation of a method for retrieving by a payment server a funding primary account number from a token primary account number used for a transaction via a payment network.

A first type of data unit is provided 200 for each transaction. Such a data unit comprises a token primary account number (T-PAN), a cryptogram signing the transaction and a transaction identifier identifying a transaction.

The cryptogram and the transaction identifier of a data unit of a first type are generated upon identification of the user and approval of the transaction by the user.

One important aspect of the invention is that the data unit of a first type is exchanged with the payment server through a telecommunication network distinct from the payment network.

The payment network refers to the network elements implemented by the issuing bank, the acquiring bank and the payment scheme to enable on-line payment transactions. According to the invention, the payment server implementing the method is outside of the payment network. In a preferred embodiment, the payment server is a cloud based server configured to communicate with an authorisation server of the issuing bank or the switch of the payment scheme and a user device.

As an example, the identifier is sent through a 3GPP (3^{rd} Generation Partnership Project) mobile network and routed via internet to the payment server. The payment network is not used for the transmission of the data unit of a first type. This characteristic of the invention allows avoiding any changes on the existing payment networks.

The data unit of the first type is memorized 201 in the payment server or in another server easily accessible from the payment server. The data unit of the first type is memorised as valid for a limited time, after which it is invalidated or erased from memory. A data unit of the first type is invalid when it is kept memorized in the payment server but cannot be used to authorize a transaction.

Then, the payment server receives 202 from the payment network a request for retrieving a funding primary account number F-PAN. This request is provided with a data unit of a second type comprising a T-PAN and a transaction identifier identifying said given transaction. These T-PAN and transaction identifier are the ones entered by the user for the transaction in the payment form of an e-merchant managed by a payment service provider (PSP). For example, the transaction identifier has the format of a card verification value (CVV) and at the time of completing the transaction, the user enters its allocated T-PAN and its CVV. The data unit of second type transmitted by the payment network is therefore composed in this case of these T-PAN and CVV.

In another embodiment, the transaction identifier has the format of an expiry date and at the time of completing the transaction, the user enters its allocated T-PAN and its expiry date. The data unit of second type transmitted by the payment network is therefore composed in this case of these T-PAN and expiry date.

In a another step 203, it is verified that there is at least one valid data unit of the first type memorized in the payment server for which the T-PAN and the transaction identifier match with those of the data unit of the second type transmitted with the request. Advantageously, the cryptogram of the data unit of the first type found in step 203 is now identified as the one generated for approving the transaction corresponding to the request received from the payment network.

If a valid data unit of the first type is found after the verification step 203, the cryptogram of this first type data unit is then verified 204 to authenticate the transaction. The cryptogram verification can be done by executing an algorithm with cryptographic keys shared (or paired) between the payment server and the device that was used to generate the cryptogram. This algorithm also processes data from the data unit of the first type to verify the cryptogram, such data having also be used to generate the cryptogram.

If said transaction is correctly authenticated, the F-PAN corresponding to the T-PAN is provided 205.

Advantageously, if a single user initiates several different transactions at one or several different e-merchant, the payment server will be able to find the right cryptogram corresponding to the right transaction thanks to the transaction identifiers. Indeed, the transaction identifiers allow the matching between the data units of the first type and the data units of the second type.

The invention allows using T-PAN with the existing payment networks traditionally used with the payment credentials of plastic cards. Moreover, the T-PAN can be used at any e-merchant instead of the plastic card PAN. It is therefore possible for the issuing bank to forbid the use of the plastic card payment credentials for on-line transactions and oblige the users to use the T-PAN communicated by their bank. The security of on-line payments is therefore increased as stolen payment credentials of traditional plastic cards cannot be anymore used by thieves.

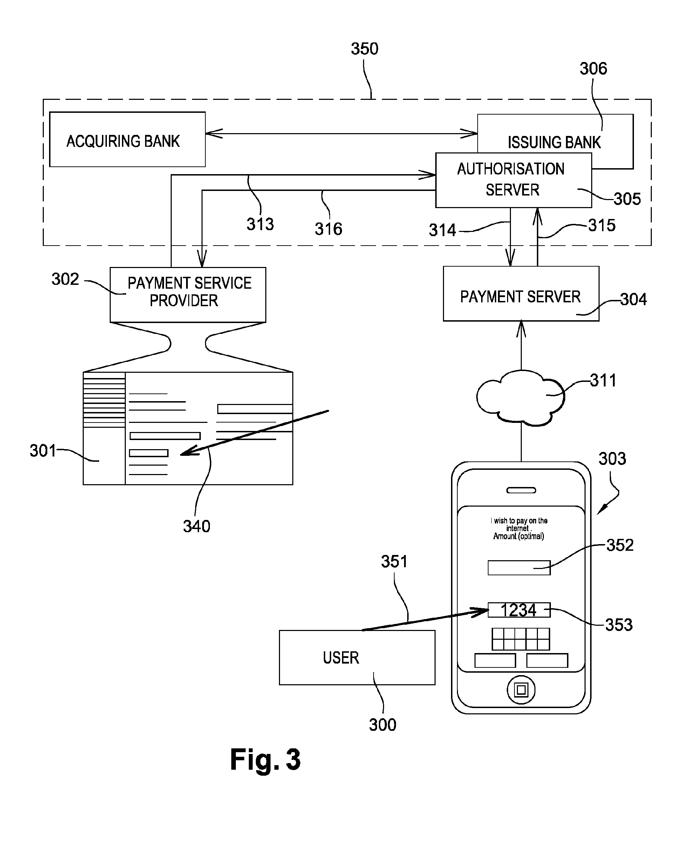

**Figure 3** is an exemplary embodiment of an improved tokenisation system according to the invention for securing online transactions.

In this example, the user is able to approve the use of a T-PAN using a mobile device such as a smartphone. For that purpose, the user 300 can be authenticated by an application executed on the mobile device, called client application. The user 300 approves the use of the T-PAN by entering 351, 353 a PIN code. Alternatively, biometric data or other known techniques to authenticate a user on a mobile device can be implemented.

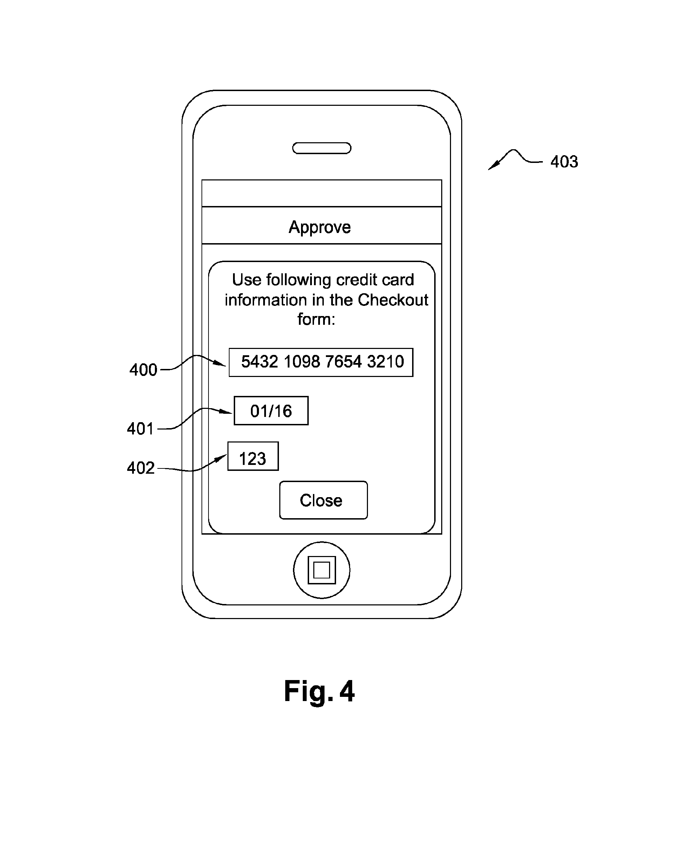

Once the user is authenticated, a T-PAN, and one or several transaction identifiers are displayed on a screen of the mobile device. **Figure 4** is an example of a mobile device 403 with an application displaying payment credentials following the user authentication. These credentials are the ones to be entered on the e-merchant payment form 301 for the transaction.

In this example, a T-PAN 400, an expiry date 401 and a CVV 401 are displayed. The T-PAN is a value communicated by an issuing bank to the user as a surrogate of the F-PAN which can or should be used for online payments.

In this example, the card verification value CVV 402 is the transaction identifier emitted for the transaction targeted by the user. Alternatively, the transaction identifier can be the expiry date or a combination of the expiry date and of the CVV.

A transaction identifier can be generated in a very simple way. For example, a counter with a number of digits equal to the number of digits of the CVV field displayed on the e-merchant payment form can be incremented each time the user authenticates himself via the client application. The transaction identifier can be generated by the application executed on the user device 303 and sent to the payment server 304 to which the user device connects or by the payment server 304 and sent to the user device 303.

In another embodiment, the transaction identifier is the price of the product the user wants to purchase. In that case, the user has to enter this transaction identifier in an empty field 352 of the interface provided by the client application. This embodiment is particularly adapted to e-merchants such as Amazon (trademark) which are memorizing the payment credentials of the user and for which the user is not required to enter expiry date or CVV for each transaction. As the price of the product is routed by the payment networks towards the issuing bank, it can advantageously be used as a transaction identifier according to the invention.

As a summary, the transaction identifier is either automatically generated by the client application, or by the payment server or entered manually by the user.

After the authentication, and in addition to the display of the payment credentials, the transaction identifier is generated by the user device 303 and transmitted to a payment server 304 via a telecommunication network 311 or generated by the payment server 304 and transmitted to the user device 303 via a telecommunication network 311. This is done in a way which is transparent for the user (in background) and the telecommunication network is distinct from the payment network. It is transmitted for example using the internet, a WIFI, 2G, 3G or 4G mobile network.

In addition, a cryptogram is generated upon the authentication of the user by the mobile device 303 and is transmitted to the payment server 304 together with the T-PAN. T-PAN, Transaction identifier and cryptogram are included in a data unit, said of a first type, which is memorized by the payment server 304. Therefore, there is one data unit of the first type which is memorized for the payment server 304 for each ongoing transaction initiated by the user of the payment service.

In one embodiment, a data unit of the first type is memorized for a predefined period of time after which it is deleted or invalidated.

Once the user has been authenticated, he enters its payment credentials in the fields provided by the e-merchant payment form 301. According to the invention, the payment credentials used for the transaction are the one provided by the client application, that is to say the payment credentials 400-402 displayed on the screen of mobile device 403.

If the transaction identifier is generated using a CVV format supported by the e-merchant web pages, the CVV field which was formerly used to pay with an F-PAN can be used to enter the transaction identifier.

Then, the payment service provider 302 sends a payment authorisation request 313 comprising the payment credentials entered by the user to an authorization server 305. This authorisation server 305 sends a de-tokenisation request 314 to the approval server 304 to retrieve the F-PAN associated to the T-PAN. For that purpose, the request 314 is sent together with a data unit comprising the T-PAN and the transaction identifier that have previously been entered by the user on the e-merchant payment form 301. This data unit is said of the second type. Note that when the transaction identifier is the price of the product, it will not be entered by the user on the payment form as it is easily accessible by the payment service provider.

Following the reception of the request 314, the payment server 304 searches if a data unit of the first type having the same T-PAN and the same transaction identifier is stored in an accessible memory. If yes, he verifies the cryptogram comprised in the identified data unit of the first type to know if the transaction is authentic and approved by the user. If the cryptogram has been positively verified, the F-PAN, which is the surrogate of the T-PAN transmitted with the two corresponding data unit of first and second type, is transmitted 315 to the authorisation server 305. This means that the transaction can be authorized and that it can be handled by the issuing bank 306. If the F-PAN is not sent back to the authorisation server 315, the transaction is declined. The skilled person will understand that the payment server 304 is configured to get an F-PAN from any T-PAN emitted by the issuing bank. For example, the payment server comprises a data base comprising a set of F-PAN associated to their T-PAN.

Then, a message 316 informing the payment service provider 302 that the transaction is accepted or declined is transmitted by the authorisation server 305 (after retokenisation) to the payment service provider.

Advantageously, this invention could avoid any modification of the payment network. More precisely, the invention is implemented by the payment server 304 and by a client application that the user can download in a very simple way. A cloud based payment server can therefore communicate with the existing payment network 350 and work in coordination with client applications downloaded and installed on the mobile devices of the users of the token-based service.

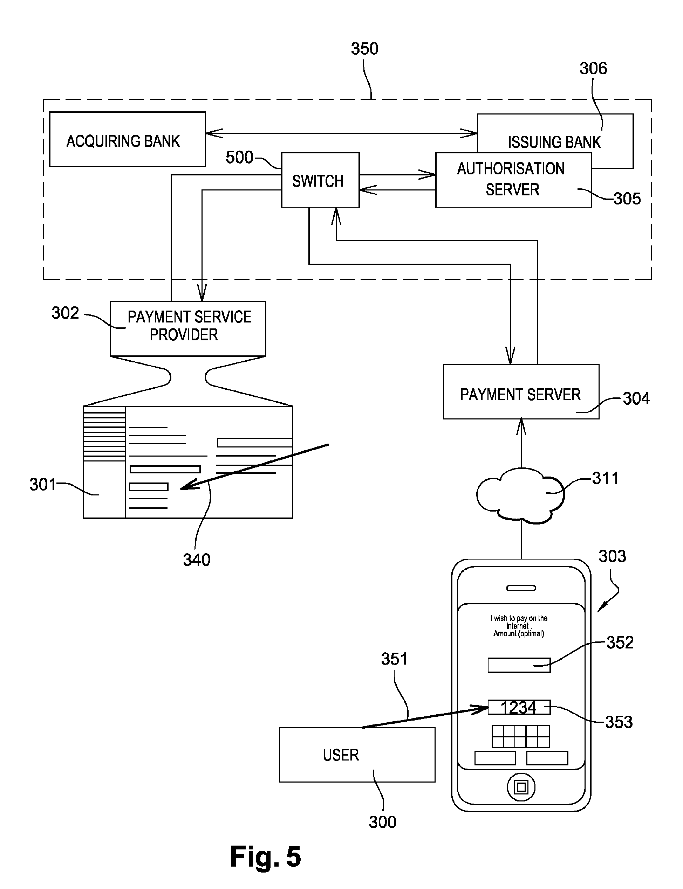

**Figure 5** is another exemplary embodiment of an improved tokenisation system according to the invention wherein the payment network's switch is used to switch authorisation messages to the payment server.

The references of figure 3 are reused for designating the same elements of the system. The difference is that a switch 500 can be implemented in the payment network 350 to connect to the payment server 304. In that case the de-tokenisation process is triggered by the switch 500 and handled by the payment server 304. The payment server 304 is therefore not connected to the payment network 350 via the authorisation server 305 of the issuing bank 306 as it was the case in the example of figure 3, but via the switch server 500.

## Claims

1. A method for retrieving by a payment server (304) adapted to communicate (314, 315) with a payment network (350) a funding primary account number (F-PAN) from a non-sensitive equivalent called token primary account number (T-PAN) used for a transaction to be carried out via the payment network (350), the method comprising the steps of:
- providing (200) for each transaction a first type of data unit comprising a token payment account number (T-PAN), a cryptogram authenticating the transaction and a transaction identifier identifying a transaction, said cryptogram and transaction identifier being generated upon approval by a user of the usage of the T-PAN, said cryptogram and T-PAN being transmitted to the payment server through a telecommunications network (311) distinct from the payment network (350);
- memorizing (201) the data units of the first type;
- receiving (202) from the payment network (350) a request (314) for retrieving a funding primary account number (F-PAN), said request being provided with a data unit of a second type comprising a token payment account number (T-PAN) and a transaction identifier identifying said given transaction;
- verifying (203) that there is at least one data unit of the first type memorized in the payment server for which the token primary account number (T-PAN) and the transaction identifier match with those of the data unit of the second type transmitted with the request;
- if a data unit of the first type is found after the verification step (203), verifying (204) that the transaction is correctly authenticated by the cryptogram of the first type data unit identified at the previous step;
- if said transaction is correctly authenticated, providing (205) the funding primary account number (F-PAN) corresponding to the token primary account number (T-PAN).

2. A method according to claim 1 in which the transaction identifier is generated on a user device (303) and sent to the payment server (304), through a telecommunications network (311) distinct from the payment network (350), to be included in the data unit of a first type.

3. A method according to claim 1 in which the transaction identifier is generated on the payment server (304) and sent to a user device (303), through a telecommunications network (311) distinct from the payment network (350), and is included in the data unit of a first type.

4. A method according to any of the preceding claims, wherein the transaction identifier has the format of a Card Verification Value (CVV).

5. A method according to any of claims 1 to 3, wherein the transaction identifier has the format of an expiry date.

6. A method according to any of claims 1 to 3, wherein the transaction identifier corresponds to a combination of a Card Verification Value (CVV) and an expiry date.

7. A method according to any of claims 1 to 3, wherein the transaction identifier is the price of the transaction.

8. A method according to any of the preceding claims, wherein a data unit of the first type is memorized (201) for a predefined period of time after which it is deleted or invalidated.

9. A method according to any of the preceding claims, wherein a data unit of the first type associated to a given transaction is deleted or invalidated once said transaction is processed, that is to say authorised or denied, by the issuing bank' authorisation server (305).

10. A method according to any of the preceding claims, wherein said cryptogram and transaction identifier are generated upon identification of the user and his approval of the usage of the T-PAN.

11. A user device (303) comprising an application configured to allow a user
to approve the use of a token primary account number (T-PAN), to generate a cryptogram upon said approval and to display the token primary account number (T-PAN) and a transaction identifier to be used by the user on a payment form of an e-merchant proposing a transaction supported by a payment network (350) and to transmit said T-PAN and cryptogram to a payment server (304) via a telecommunication network (311) distinct from the payment network (350).

12. A user device (303) according to claim 11 configured to generate the transaction identifier to be displayed, upon approval of the use of a token primary account number (T-PAN).

13. A user device (303) according to claim 11 configured to receive the transaction identifier to be displayed from the payment server (304) upon approval of the use of a token primary account number (T-PAN).

14. A user device according to any of claims 11 to 13, wherein said cryptogram and transaction identifier are generated upon identification of the user and approval of the usage of the T-PAN.

15. A payment server (304) adapted to communicate (314, 315) with a
payment network (350) and implementing the method according to any of claims 1 to 10.
